# EUROPEAN PATENT APPLICATION

(11) **EP 2 451 160 A2**
(43) Date of publication of application: **09.05.2012**
(21) Application number: 11187654.6
(22) Date of filing: 03.11.2011
(51) Int. Cl.: H04N 7/26, H04N 7/50

(54) **Video compression with adaptive processing order of blocks within a macroblock**

(30) Priority: 03.11.2010 KR 20100108758
(71) Applicant: Samsung Electronics Co., Ltd., Suwon-si, Gyeonggi-do (KR)
(72) Inventor: Lee, Sang Jo, 446-712 Gyeonggi-do (KR); Lee, Shi Hwa, 446-712 Gyeonggi-do (KR); Song, Joon Ho, 446-712 Gyeonggi-do (KR)
(74) Representative: Grünecker, Kinkeldey, Stockmair & Schwanhäusser

(57) **Abstract**

An image processing apparatus may process a macro block by determining a processing order of the macro block based on a predicted directivity. The image processing apparatus may predict a directivity of the macro block based on neighboring pixel data in the macro block, determine the processing order of the macro block based on the predicted directivity, and process the macro block according to the determined processing order, thereby enhancing a data compression rate.

## Description

### CROSS-REFERENCE TO RELATED APPLICATIONS

This application claims the priority benefit of Korean Patent Application No. 10-2010-0108758, filed on November 3, 2010, in the Korean Intellectual Property Office, the disclosure of which is incorporated herein by reference.

### BACKGROUND

### 1. Field

Example embodiments relate to enhancing a compression rate by adjusting an image processing order.

### 2. Description of the Related Art

General video compression technology may increase a video compression rate by removing an overlapping portion using spatial redundancy and temporal redundancy of a video image.

A video codec, for example, an H.264 codec and a high efficiency video coding (HEVC) codec both of which are involved in ongoing standardization, may more efficiently remove the spatial redundancy using an intra prediction scheme. The intra prediction scheme corresponds to a scheme of increasing a coding rate by coding only a corresponding difference by referring to pixel data around a block when compressing pixel data of the block. Intra prediction may be similarly performed in both an encoder and a decoder. A difference lies in that the encoder may generate the pixel data around the block and differential data of the block, while the decoder may generate the pixel data of the block based on the differential data recovered from a bitstream and the pixel data around the block.

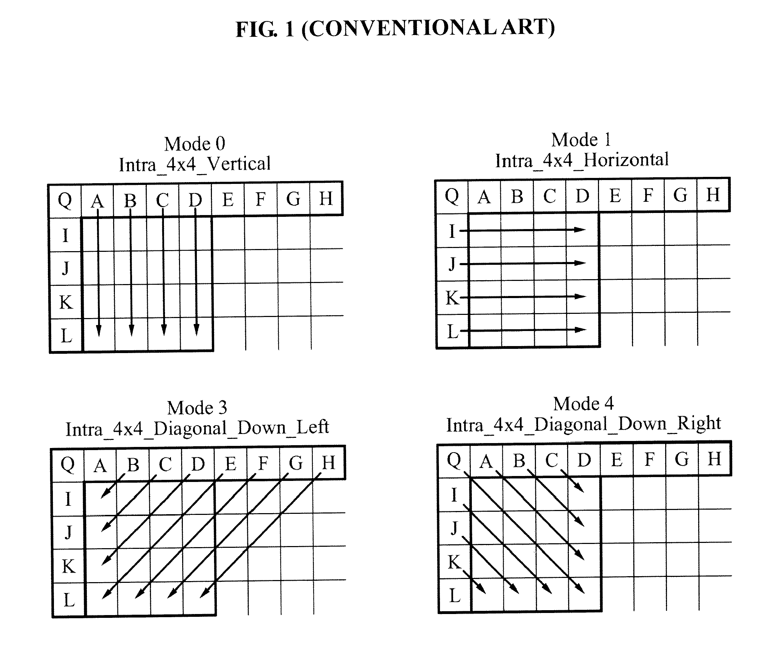

FIG. 1 illustrates an example of intra prediction according to conventional art.

Referring to FIG. 1, mode 0 corresponds to a vertical prediction. A directivity of a macro block may be predicted by referring to upper end pixel data of the macro block, for example, a 4x4 pixel macro block. Mode 1 corresponds to a horizontal prediction. The directivity of the macro block may be predicted by referring to left pixel data of the macro block. Mode 3 and mode 4 correspond to a diagonal prediction. The directivity of the macro block may be predicted by referring to upper right end pixel data or left upper end pixel data of the macro block.

Even though the intra prediction is performed in mode 3 and mode 4 using similar schemes, the schemes may be slightly different from each other. The intra prediction is performed using pixel data adjacent to the macro block in mode 4, whereas the intra prediction is performed using only pixel data around an upper end in mode 3. Right pixel data is not used in mode 3, and as a result, a coding efficiency of mode 3 may deteriorate in comparison to the intra prediction having a directivity of mode 4. Inability to use right pixel data in the diagonal lower left end direction of mode 3 may be associated with a processing order within the macro block.

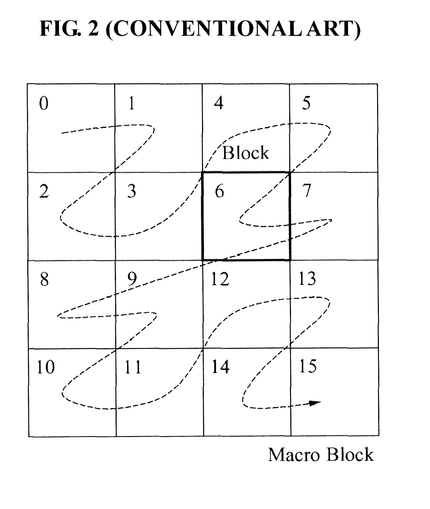

FIG. 2 illustrates a processing order of a macro block used in an H.264 video codec according to conventional art.

Referring to FIG. 2, processing orders of blocks may be determined in an order from '0' to '15'. For example, in the case of a number 1 block, the number 1 block may not use a number 4 block that is positioned on the right of the number 1 block because pixel data around the number 4 block has yet to be processed. From a viewpoint of a decoder, data is not generated. In this example, when a directivity of prediction corresponds to a diagonal lower left end, the number 1 block may use only recovered upper end pixel data. Accordingly, pixel data around a block that may be referred to may be constrained according to the processing order of the macro block and thus, the coding efficiency may deteriorate.

### SUMMARY

The foregoing and/or other aspects are achieved by providing an image processing apparatus, including at least one processing device to control a directivity predictor to predict a directivity of a macro block based on neighboring pixel data in the macro block, an order determining unit to determine a processing order of the macro block based on the predicted directivity and a data processing unit to process the macro block according to the determined processing order.

The directivity predictor may predict a directivity of pixel data processed as the directivity of the macro block.

When upper right end pixel data is processed among the neighboring pixel data, the directivity predictor may predict the directivity of the macro block in a lower left end direction.

When the directivity of the macro block is predicted in the lower left end direction, the order determining unit may determine the processing order of the macro block classified into a group including a predetermined number of blocks, in a direction from a rightmost block within a group positioned in an upper right end toward the lower left end direction.

When the directivity of the macro block is predicted in the lower left end direction, the order determining unit may determine the processing order of the macro block including a plurality of blocks, in a direction from a rightmost block positioned in an upper end toward the lower left end direction.

When lower left end pixel data is processed among the neighboring pixel data, the directivity predictor may predict the directivity of the macro block in an upper right end direction.

When the directivity of the macro block is predicted in the upper right end direction, the order determining unit may determine the processing order of the macro block classified into a group including a predetermined number of blocks, in a direction from a leftmost block within a group positioned in a lower left end toward the upper right end direction.

When the directivity of the macro block is predicted in the upper right end direction, the order determining unit may determine the processing order of the macro block including a plurality of blocks in a direction from a leftmost block positioned in a lower end toward the upper right end direction.

The order determining unit may segment the macro block into a plurality of blocks, and may variably adjust the processing order based on a block unit according to the predicted directivity.

The order determining unit may classify the macro block into a group including a predetermined number of blocks, and may variably adjust the processing order based on a group unit according to the predicted directivity.

The foregoing and/or other aspects are achieved by providing an image processing method, including predicting, by at least one processing device, a directivity of a macro block based on neighboring pixel data in the macro block and processing, by the at least one processing device, the macro block by determining a processing order of the macro block based on the predicted directivity.

The example embodiments may include an image processing apparatus and method that may more efficiently process an image by predicting a directivity based on neighboring pixel data in a macro block, by variably adjusting a processing order of the macro block according to the predicted directivity, and by processing the macro block according to the adjusted processing order.

The example embodiments may also include an image processing apparatus and method that may enhance a compression rate of video coding by variably adjusting processing orders of a plurality of blocks within a macro block to thereby compress the macro block.

According to another aspect of one or more embodiments, there is provided at least one non-transitory computer readable medium including computer readable instructions that control at least one processor to implement methods of one or more embodiments.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects and advantages will become apparent and more readily appreciated from the following description of embodiments, taken in conjunction with the accompanying drawings of which:
FIG. 1 illustrates an example of intra prediction according to conventional art;
FIG. 2 illustrates a processing order of a macro block used in an H.264 video codec according to conventional art;
FIG. 3 illustrates an image processing apparatus according to example embodiments;
FIG. 4 illustrates examples of adjusting a processing order according to a directivity;
FIGS. 5A and 5B illustrate an example of processing a macro block based on a lower left end direction;
FIGS. 6A and 6B illustrate an example of processing a macro block based on an upper right end direction;
FIGS. 7A through 7C illustrate an example of determining a processing order according to a directivity;
FIGS. 8A through 8C illustrate an example of variably adjusting a processing order according to a directivity;
FIG. 9 illustrates an image processing method according to example embodiments; and
FIG. 10 illustrates an image processing method according to example embodiments.

### DETAILED DESCRIPTION

Reference will now be made in detail to embodiments, examples of which are illustrated in the accompanying drawings, wherein like reference numerals refer to like elements throughout. Embodiments are described below to explain the present disclosure by referring to the figures.

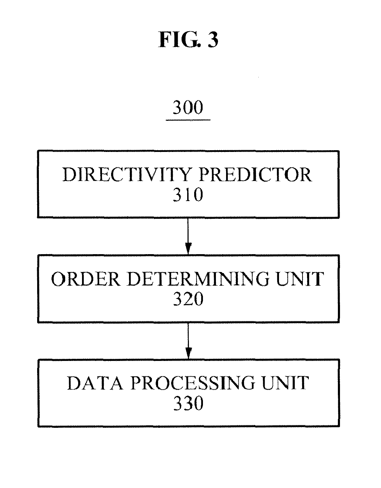

FIG. 3 illustrates an image processing apparatus 300 according to example embodiments.

Referring to FIG. 3, the image processing apparatus 300 may include a directivity predictor 310, an order determining unit 320, and a data processing unit 330.

The directivity predictor 310 may predict a directivity of a macro block based on neighboring pixel data in the macro block.

To compress image data, the image data may be processed based on a macro block unit by dividing the image data into blocks having a predetermined size of a grid, and by grouping a plurality of blocks into a macro block. In image data compression, an available range of neighboring pixel data in the macro block may vary according to a predicted directivity and thus, the compression efficiency may vary. Specifically, the compression efficiency may vary according to the predicted directivity.

The directivity predictor 310 may predict a directivity of pixel data processed as the directivity of the macro block. For example, when upper right end pixel data is processed among the neighboring pixel data, the directivity predictor 310 may predict the directivity of the macro block in a lower left end direction. When lower left end pixel data is processed among the neighboring pixel data, the directivity predictor 310 may predict the directivity of the macro block in an upper right end direction. Specifically, the directivity of the macro block may be predicted based on a direction in which the neighboring pixel data is processed.

The order determining unit 320 may determine a processing order of the macro block based on the predicted directivity. For example, the order determining unit 320 may segment the macro block into a plurality of blocks, and may variably adjust the processing order based on a block unit according to the predicted directivity. Also, the order determining unit 320 may classify the macro block into a group including a predetermined number of blocks, and may variably adjust the processing order based on a group unit according to the predicted directivity.

In general, a compression scheme used in an H.264 codec may classify a macro block into a group including a predetermined number of blocks among a plurality of blocks comprising the macro block, and process data based on a group unit or a block unit. Each group and each block may be processed in a processing order of a left-to-right and up-to-down direction. The above general processing method may be efficient when a directivity of the macro block is predicted in a right lower end direction. However, the method may coding efficiency that deteriorates when the directivity of the macro block is predicted in a different direction.

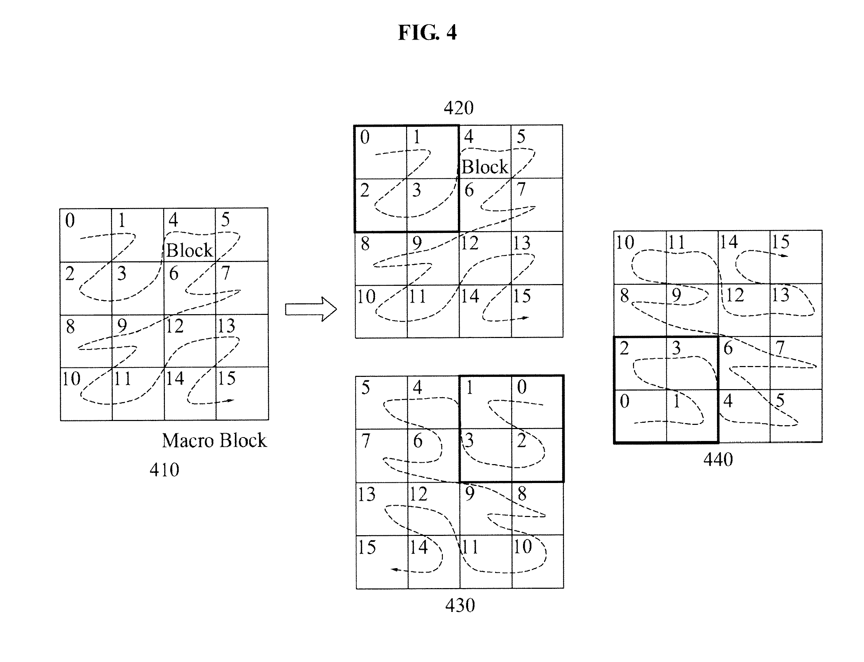

FIG. 4 illustrates examples of adjusting a processing order according to a directivity.

Referring to 410, when the processing order is determined according to a conventional method, a macro block may be processed in a lower right end direction. Accordingly, a left block and an upper end block of a block to be currently processed may be present at all times and thus, it is possible to achieve a relatively high coding efficiency. However, when the macro block is processed in a lower left end direction, a right block of the block desired to be currently processed may be absent at all times and thus, only a right block of an upper end may be used. Accordingly, compared to the processing order according to the right lower end, the coding efficiency may deteriorate.

Referring to 420, when left upper end pixel data is processed among neighboring pixel data, the directivity predictor 310 may predict the directivity of the macro block as the right lower end direction. In this example, the order determining unit 320 may process the macro block by determining the processing order as the right lower end direction which is the same as in 410. As shown in 420, the order determining unit 320 may determine the processing order from a leftmost block within a group positioned in a left upper end within the macro block toward the right lower end direction. The data processing unit 330 may process the macro block in an order from '0' to '15' according to the determined processing order. Here, processing indicates performing of intra prediction for encoding or decoding.

Referring to 430, when upper right end pixel data is processed among the neighboring pixel data, the directivity predictor 310 may predict the directivity of the macro block in a lower left end direction. In this example, the order determining unit 320 may determine the processing order from a rightmost block within a group positioned in an upper right end toward a lower left end direction. The data processing unit 330 may process the macro block in an order from '0' to '15' according to the determined processing order.

Referring to 440, when lower left end pixel data is processed among the neighboring pixel data, the directivity predictor 310 may predict the directivity of the macro block in a upper right end direction. In this example, the order determining unit 320 may determine the processing order as a direction from a leftmost block within a group positioned in a lower left end toward an upper right end direction. The data processing unit 330 may process the macro block in an order from '0' to '15' according to the determined processing order.

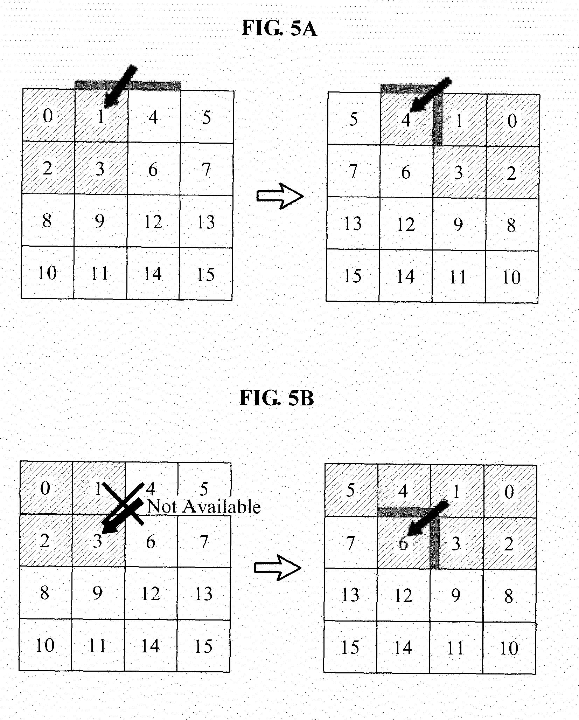

FIGS. 5A and 5B illustrate an example of processing a macro block in a lower left end direction.

Referring to FIG. 5A, when a predicted directivity corresponds to lower left end direction, a left diagram shows a general processing order in a left-to-right direction. In this example, right pixel data of a block to be currently processed is absent, and a macro block may be processed by referring to only upper end pixel data. However, in a right diagram according to example embodiments, a processing order may be adjusted by the order determining unit 320 according to a direction from a rightmost block, i.e., a number 0 block positioned in an upper end, and a right-to-left direction. Thus, the macro block may be more efficiently processed. In this example, right pixel data of the block to be currently processed is present at all times within the macro block. For example, when a number 4 block is to be processed, the data processing unit 330 may process the number 4 block based on the number 1 block and neighboring pixel data.

Referring to FIG. 5B, when the predicted directivity corresponds to a lower left end direction, and when a number 3 block is to be processed, the lower left end direction processing may not be performed in a left diagram according to the conventional art because upper right end pixel data is absent. In a right diagram, according to example embodiments, the processing order may be adjusted to be a direction from a rightmost block, i.e., a number 0 block within a group positioned in an upper right end toward the lower left end direction by the order determining unit 320. For example, when processing a number 6 block of the right diagram that is positioned in the same position as the number 3 block of the left diagram, right pixel data (number 3 block) adjacent to the number 6 block and upper end pixel data (number 4 block) are present. Thus, the data processing unit 330 may efficiently process the number 6 block in the lower left end direction.

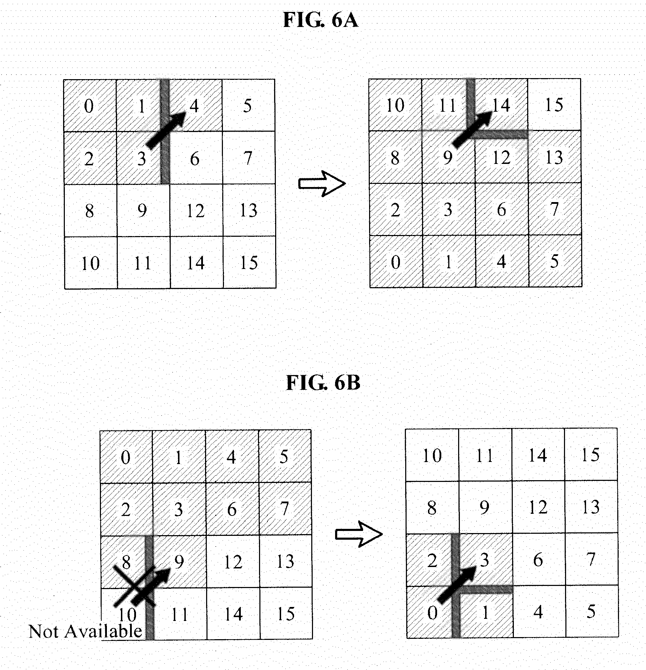

FIGS. 6A and 6B illustrates an example of processing a macro block in an upper right end direction.

Referring to FIG. 6A, when a predicted directivity corresponds to an upper right end direction, a left diagram shows a general processing order according to an up-to-down direction. In this example, because lower pixel data (number 6 block) from a number 4 block to be currently processed is absent, a macro block may be processed by referring to only left pixel data. However, a right diagram according to example embodiments shows a processing order according to a lower-to-upper direction. In this example, because left pixel data (number 11 block) and lower pixel data (number 12 block) of a number 14 block to be currently processed are present at all times within the macro block, the data processing unit 330 may more efficiently process the macro block based on adjacent left pixel data and the lower pixel data.

Referring to FIG. 6B, when the predicted directivity corresponds to a upper right end direction, and when a number 9 block is to be processed, the processing may not proceed in the upper right end direction in a left diagram according to the conventional art because lower left end (number 11 block) pixel data is absent. In a right diagram according to example embodiments, the processing order may be adjusted according to a lower-to-upper direction. Left pixel data (number 2 block) and lower pixel data (number 1 block) adjacent to a number 3 block are present in processing the number 3 block positioned in the same position as the number 9 block of the left diagram, and the data processing unit 330 may efficiently process the number 3 block by referring to a number 2 block corresponding to a left block, a number 0 block corresponding to a diagonal block, and a number 1 block corresponding to a lower end block.

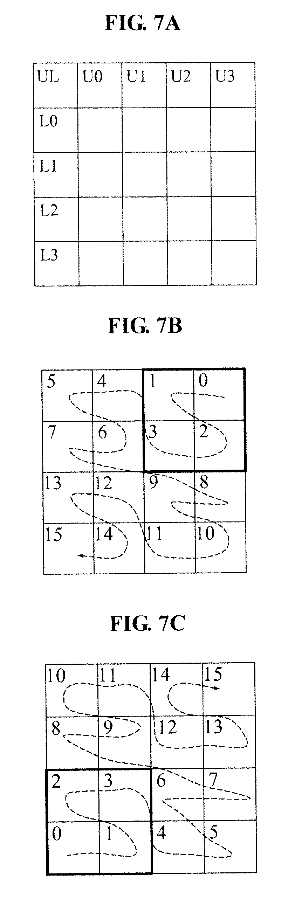

FIGS. 7A through 7C illustrate an example of determining a processing order according to a directivity.

Referring to FIG. 7A, the data processing unit 330 may predict an average intra prediction directivity of a macro block based on intra prediction information of blocks around the macro block. As shown in FIG. 7A, the directivity predictor 310 may verify intra prediction information of nine neighboring blocks: UL, L0, L1, L2, L3, U0, U1, U2, and U3. Each intra prediction directivity may be classified into one of three directions, for example, a lower left end direction, an upper right end direction, and a remaining direction. The directivity predictor 310 may classify intra prediction directivities into one of three directivities and then, predict, as the directivity of the macro block, a directivity into which most intra prediction directivities are classified. The order determining unit 320 may select a processing order within the macro block based on the predicted directivity.

Referring to FIG. 7B, when the directivity of the macro block is predicted in the lower left end direction, the order determining unit 320 may set the processing order to be in a right-to-left and upper-to-lower direction. The data processing unit 330 may process the macro block from a rightmost block (number 0 block) within a group positioned in an upper right end toward the lower left end direction.

Referring to FIG. 7C, when the directivity of the macro block is predicted in the upper right end direction, the order determining unit 320 may set the processing order to be in a left-to-right and lower-to-upper direction. The data processing unit 330 may process the macro block from a leftmost block (number 0 block) within a group positioned within a lower left end toward the upper right end direction.

When the directivity of the macro block is predicted in the remaining direction, the order determining unit 320 may set the processing order to be in a left-to-right and upper-to-lower direction that is most widely used. Even though not particularly illustrated, the data processing unit 330 may process the macro block from a leftmost block within a group positioned within a left upper end toward a right lower end direction.

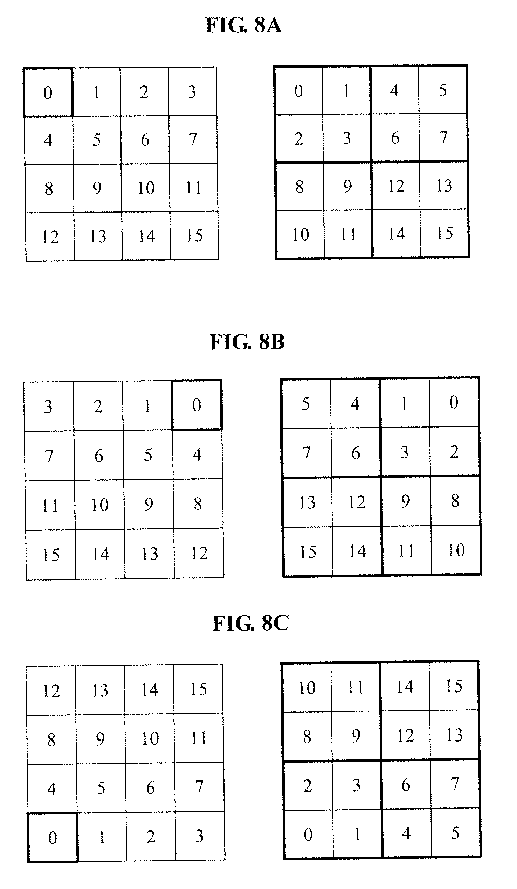

FIGS. 8A through 8C illustrate an example of variably adjusting a processing order according to a directivity.

Referring to FIG. 8A, the order determining unit 320 may set the processing order in a left-to-right and upper-to-lower direction that is most widely used. In this example, as shown in a left diagram, the data processing unit 330 may set the processing order based on a block unit comprising a macro block. The data processing unit 330 may process the macro block from a leftmost block (number 0 block) belonging to a first upper end toward a right direction and then from a leftmost block (number 4 block) belonging to a second upper end toward a right direction.

As shown in a right diagram of FIG. 8A, with respect to the left-to-right and upper-to-lower direction, the data processing unit 330 may set the processing order based on a group unit by grouping a plurality of blocks comprising the macro block. For example, when the macro block includes 16 blocks, the data processing unit 330 may group four blocks into a single group. Specifically, the data processing unit 330 may initially process a number 0 block through a number 3 block belonging to a first group positioned in a left upper end, from a leftmost block, i.e., the number 0 block to a right direction and then process a number 4 block through a number 7 block belonging to a second group positioned in an upper right end, from a leftmost block (number 4 block) to a right direction. The data processing unit 330 may initially process blocks within the first group and then sequentially process blocks within the second group, a number 8 block through a number 11 within a third group, and a number 12 block through a number 15 block within a fourth group.

Referring to FIG. 8B, when a directivity of the macro block is predicted as lower left end direction', the order determining unit 320 may set the processing order in a right-to-left and upper-to-lower direction. In this example, as shown in a left diagram, the data processing unit 330 may set the processing order based on a block unit comprising a macro block. The data processing unit 330 may process the macro block from a rightmost block (number 0 block) belonging to a first upper end toward a left direction and then from a rightmost block (number 4 block) belonging to a second upper end toward a left direction.

As shown in a right diagram of FIG. 8B, with respect to the right-to-left and up-to-down direction, the data processing unit 330 may set the processing unit based on a group unit by grouping a plurality of blocks comprising the macro block. For example, the data processing unit 330 may process a number 0 block through a number 3 block belonging to a first group positioned in an upper right end from a rightmost block (number 0 block) toward a left direction and then process a number 4 block through a number 7 block belonging to a second group positioned in a left upper end from a right block (number 4 block) toward a left direction.

Referring to FIG. 8C, when the directivity of the macro block is predicted as an upper right end direction, the order determining unit 320 may set the processing order as a left-to-right and lower-to-upper direction. In this example, as shown in a left diagram, the data processing unit 330 may set the processing order based on a block unit. The data processing unit 330 may process the macro block from a leftmost block (number 0 block) belonging to a bottom lower end toward a right direction and then from a leftmost block (number 4 block) belonging to a second lower end toward a right direction.

As shown in a right diagram of FIG. 8C, with respect to the left-to-right and lower-to-upper direction, the data processing unit 330 may set the processing order based on a group unit. The data processing unit 330 may initially process a number 0 block through a number 3 block belonging to a first group positioned in a lower left end from a leftmost block (number 0 block) toward a right direction and then process a number 4 block through a number 7 block belonging to a second group positioned in an upper right end from a left block (number 4 block) toward a right direction.

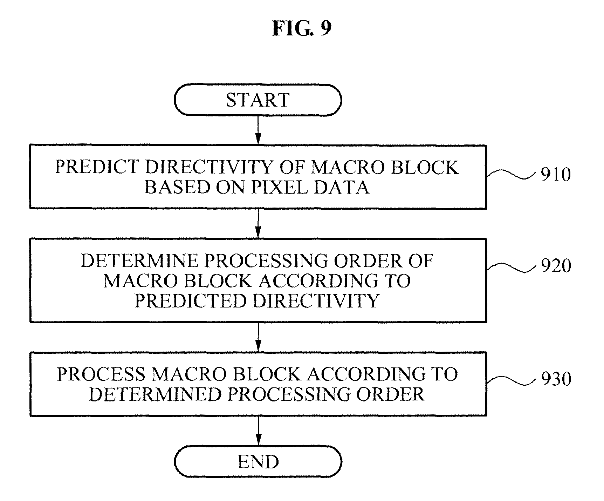

FIG. 9 illustrates an image processing method according to example embodiments.

Referring to FIG. 9, in 910, the image processing apparatus 300 may predict a directivity of a macro block based on neighboring pixel data in the macro block. For example, the image processing apparatus 300 may predict a directivity of the neighboring pixel data processed as the directivity of the macro block.

In 920, the image processing apparatus 300 may determine a processing order of the macro block based on the predicted directivity. For example, the image processing apparatus 300 may segment the macro block into a plurality of blocks, and may variably adjust the processing order based on a block unit according to the predicted directivity. Also, the image processing apparatus 300 may classify the macro block into a group including a predetermined number of blocks, and may variably adjust the processing order based on a group unit according to the predicted directivity. Adjusting of the processing order is described above and thus, further detailed description will be omitted herein.

In 930, the image processing apparatus 300 may process the macro block according to the determined processing order. The image processing apparatus 300 may encode blocks within the macro block according to the determined processing order.

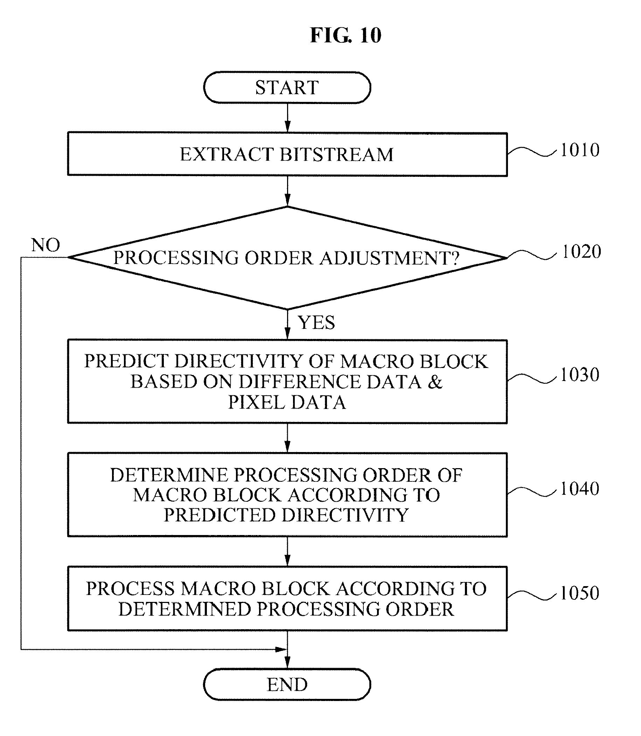

FIG. 10 illustrates an image processing method according to example embodiments.

Referring to FIG. 10, in 1010, the image processing apparatus 300 may extract a bitstream. The image processing method of FIG. 9 may be performed for encoding while the image processing method of FIG. 10 may be performed for decoding.

In 1020, the image processing apparatus 300 may determine whether to use a processing order adjustment scheme.

When the processing order adjustment scheme is to be used, the image processing apparatus 300 may predict a directivity of a macro block based on differential data recovered from the bitstream and neighboring pixel data in 1030.

In 1040, the image processing apparatus 300 may determine a processing order of the macro block based on the predicted directivity.

In 1050, the image processing apparatus 300 may process the macro block according to the determined processing order.

Conversely, when the processing order adjustment scheme is not to be used in 1020, the image processing apparatus 300 may process the macro block according to a general processing order.

Data storage apparatuses and controllers according to example embodiments may be embodied using various types of packages. For example, flash memory devices and/or memory controllers may be embodied using packages such as Package on Packages (PoPs), Ball Grid Arrays (BGAs), Chip Scale Packages (CSPs), Plastic Leaded Chip Carrier (PLCC), Plastic Dual In-Line Package (PDIP), Die in Waffle Pack, Die in Wafer Form, Chip On Board (COB), Ceramic Dual In-Line Package (CERDIP), Plastic Metric Quad Flat Pack (MQFP), Quad Flatpack (QFP), Small Outline Integrated Circuit (SOIC), Shrink Small Outline Package (SSOP), Thin Small Outline (TSOP), Thin Quad Flatpack (TQFP), System In Package (SIP), Multi Chip Package (MCP), Wafer-level Fabricated Package (WFP), Wafer-Level Processed Stack Package (WSP), and the like.

The above-described embodiments may be recorded in non-transitory computer-readable media including program instructions to implement various operations embodied by a computer. The media may also include, alone or in combination with the program instructions, data files, data structures, and the like. Examples of computer-readable media (computer-readable storage devices) include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may be a plurality of computer-readable storage devices in a distributed network, so that the program instructions are stored in the plurality of computer-readable storage devices and executed in a distributed fashion. The program instructions may be executed by one or more processors or processing devices. The computer-readable media may also be embodied in at least one application specific integrated circuit (ASIC) or Field Programmable Gate Array (FPGA). Examples of program instructions include both machine code, such as produced by a compiler, and files containing higher level code that may be executed by the computer using an interpreter. The described hardware devices may be configured to act as one or more software modules in order to perform the operations of the above-described exemplary embodiments, or vice versa.

Although embodiments have been shown and described, it should be appreciated by those skilled in the art that changes may be made in these embodiments without departing from the principles of the disclosure, the scope of which is defined by the claims

In particular, the invention provides the following embodiments 1 to 20:
1. An image processing apparatus, comprising:
   at least one processing device to control:
      a directivity predictor to predict a directivity of a macro block based on neighboring pixel data in the macro block;
      an order determining unit to determine a processing order of the macro block based on the predicted directivity; and
      a data processing unit to process the macro block according to the determined processing order.
2. The image processing apparatus of embodiment 1, wherein the directivity predictor predicts a directivity of pixel data processed as the directivity of the macro block.
3. The image processing apparatus of embodiment 1, wherein when upper right end pixel data is processed among the neighboring pixel data, the directivity predictor predicts the directivity of the macro block in a lower left end direction.
4. The image processing apparatus of embodiment 3, wherein when the directivity of the macro block is predicted in the lower left end direction, the order determining unit determines the processing order of the macro block classified into a group comprising a predetermined number of blocks, in a direction from a rightmost block within a group positioned in an upper right end toward the lower left end direction.
5. The image processing apparatus of embodiment 3, wherein when the directivity of the macro block is predicted in the lower left end direction, the order determining unit determines the processing order of the macro block comprising a plurality of blocks, in a direction from a rightmost block positioned in an upper end toward the lower left end direction.
6. The image processing apparatus of embodiment 1, wherein when lower left end pixel data is processed among the neighboring pixel data, the directivity predictor predicts the directivity of the macro block in an upper right end direction.
7. The image processing apparatus of embodiment 6, wherein when the directivity of the macro block is predicted in the upper right end direction, the order determining unit determines the processing order of the macro block classified into a group comprising a predetermined number of blocks, in a direction from a leftmost block within a group positioned in a lower left end toward the upper right end direction.
8. The image processing apparatus of embodiment 6, wherein when the directivity of the macro block is predicted in the upper right end direction, the order determining unit determines the processing order of the macro block comprising a plurality of blocks in a direction from a leftmost block positioned in a lower end toward the upper right end direction.
9. The image processing apparatus of embodiment 1, wherein the order determining unit segments the macro block into a plurality of blocks, and variably adjusts the processing order based on a block unit according to the predicted directivity.
10. The image processing apparatus of embodiment 1, wherein the order determining unit classifies the macro block into a group comprising a predetermined number of blocks, and variably adjusts the processing order based on a group unit according to the predicted directivity.
11. An image processing method, comprising:
   predicting, by at least one processing device, a directivity of a macro block based on neighboring pixel data in the macro block; and
   processing, by the at least one processing device, the macro block by determining a processing order of the macro block based on the predicted directivity.
12. The image processing method of embodiment 11, wherein the predicting comprises predicting a directivity of pixel data processed as the directivity of the macro block.
13. The image processing method of embodiment 11, wherein the predicting comprises predicting the directivity of the macro block in a lower left end direction when upper right end pixel data is processed among the neighboring pixel data.
14. The image processing method of embodiment 13, wherein the processing comprises processing the macro block in a direction from a rightmost block within a group positioned in an upper right end toward the lower left end direction within the macro block classified into a group comprising a predetermined number of blocks, when the directivity of the macro block is predicted in the lower left end direction.
15. The image processing method of embodiment 13, wherein the processing comprises processing the macro block in a direction from a rightmost block positioned in an upper end toward the lower left end direction within the macro block comprising a plurality of blocks when the directivity of the macro block is predicted in the lower left end direction.
16. The image processing method of embodiment 11, wherein the predicting comprises predicting the directivity of the macro block in an upper right end direction when lower left end pixel data is processed among the neighboring pixel data.
17. The image processing method of embodiment 16, wherein the processing comprises processing the macro block in a direction from a leftmost block within a group positioned in a lower left end toward the upper right end direction within the macro block classified into a group comprising a predetermined number of blocks, when the directivity of the macro block is predicted in the upper right end direction.
18. The image processing method of embodiment 16, wherein the processing comprises processing the macro block in a direction from a leftmost block positioned in a lower end toward the upper right end direction within the macro block comprising a plurality of blocks when the directivity of the macro block is predicted in the upper right end direction.
19. The image processing method of embodiment 11, further comprising:
   segmenting the macro block into a plurality of blocks;
   classifying the macro block into a group comprising a predetermined number of segmented blocks; and
   variably adjusting the processing order based on one of a block unit and a group unit according to the predicted directivity.
20. At least one non-transitory computer readable medium comprising computer readable instructions that control at least one processing device to implement the method of embodiment 11.

## Claims

1. An image processing apparatus (300), comprising:
at least one processing device to control:
a directivity predictor (310) to predict a directivity of a macro block based on neighboring pixel data in the macro block;
an order determining unit (320) to determine a processing order of the macro block based on the predicted directivity; and
a data processing unit (330) to process the macro block according to the determined processing order.

2. The image processing apparatus (300) of claim 1, wherein the directivity predictor (310) predicts a directivity of pixel data processed as the directivity of the macro block.

3. The image processing apparatus (300) of claim 1, wherein when upper right end pixel data is processed among the neighboring pixel data, the directivity predictor (310) predicts the directivity of the macro block in a lower left end direction.

4. The image processing apparatus (300) of claim 3, wherein when the directivity of the macro block is predicted in the lower left end direction, the order determining unit (320) determines the processing order of the macro block classified into a group comprising a predetermined number of blocks, in a direction from a rightmost block within a group positioned in an upper right end toward the lower left end direction; or
wherein when the directivity of the macro block is predicted in the lower left end direction, the order determining unit (320) determines the processing order of the macro block comprising a plurality of blocks, in a direction from a rightmost block positioned in an upper end toward the lower left end direction.

5. The image processing apparatus (300) of claim 1, wherein when lower left end pixel data is processed among the neighboring pixel data, the directivity predictor (310) predicts the directivity of the macro block in an upper right end direction.

6. The image processing apparatus (300) of claim 5, wherein when the directivity of the macro block is predicted in the upper right end direction, the order determining unit (320) determines the processing order of the macro block classified into a group comprising a predetermined number of blocks, in a direction from a leftmost block within a group positioned in a lower left end toward the upper right end direction; or
wherein when the directivity of the macro block is predicted in the upper right end direction, the order determining unit (320) determines the processing order of the macro block comprising a plurality of blocks in a direction from a leftmost block positioned in a lower end toward the upper right end direction.

7. The image processing apparatus (300) of claim 1, wherein the order determining unit (320) segments the macro block into a plurality of blocks, and variably adjusts the processing order based on a block unit according to the predicted directivity; or
wherein the order determining unit (320) classifies the macro block into a group comprising a predetermined number of blocks, and variably adjusts the processing order based on a group unit according to the predicted directivity.

8. An image processing method, comprising:
predicting, by at least one processing device, a directivity of a macro block based on neighboring pixel data in the macro block; and
processing, by the at least one processing device, the macro block by determining a processing order of the macro block based on the predicted directivity.

9. The image processing method of claim 8, wherein the predicting comprises predicting a directivity of pixel data processed as the directivity of the macro block.

10. The image processing method of claim 8, wherein the predicting comprises predicting the directivity of the macro block in a lower left end direction when upper right end pixel data is processed among the neighboring pixel data.

11. The image processing method of claim 10, wherein the processing comprises processing the macro block in a direction from a rightmost block within a group positioned in an upper right end toward the lower left end direction within the macro block classified into a group comprising a predetermined number of blocks, when the directivity of the macro block is predicted in the lower left end direction; or
wherein the processing comprises processing the macro block in a direction from a rightmost block positioned in an upper end toward the lower left end direction within the macro block comprising a plurality of blocks when the directivity of the macro block is predicted in the lower left end direction.

12. The image processing method of claim 8, wherein the predicting comprises predicting the directivity of the macro block in an upper right end direction when lower left end pixel data is processed among the neighboring pixel data.

13. The image processing method of claim 12, wherein the processing comprises processing the macro block in a direction from a leftmost block within a group positioned in a lower left end toward the upper right end direction within the macro block classified into a group comprising a predetermined number of blocks, when the directivity of the macro block is predicted in the upper right end direction; or
wherein the processing comprises processing the macro block in a direction from a leftmost block positioned in a lower end toward the upper right end direction within the macro block comprising a plurality of blocks when the directivity of the macro block is predicted in the upper right end direction.

14. The image processing method of claim 8, further comprising:
segmenting the macro block into a plurality of blocks;
classifying the macro block into a group comprising a predetermined number of segmented blocks; and
variably adjusting the processing order based on one of a block unit and a group unit according to the predicted directivity.

15. At least one non-transitory computer readable medium comprising computer readable instructions that control at least one processing device to implement the method of claim 8.
